# EUROPÄISCHE PATENTSCHRIFT

(11) **EP 1 097 080 B1**
(45) Veröffentlichungstag und Bekanntmachung des Hinweises auf die Patenterteilung: **18.07.2007**
(21) Anmeldenummer: 00926847.5
(22) Anmeldetag: 08.04.2000
(51) Int. Cl.: B62K 23/04

(54) **VERSCHLUSSGLIED FÜR EINE MONTAGEÖFFNUNG AN EINEM SCHALTER FÜR FAHRRÄDER**
CLOSURE MEMBER FOR AN OPENING IN AN ASSEMBLY, SITUATED ON A BICYCLE GEAR BOX
ELEMENT DE FERMETURE POUR UNE OUVERTURE DE MONTAGE SITUEE SUR UN COMMUTATEUR POUR BICYCLETTE

(30) Priorität: 14.05.1999 DE 19922327
(43) Veröffentlichungstag der Anmeldung: 09.05.2001
(73) Patentinhaber: SRAM Deutschland GmbH, 97404 Schweinfurt (DE)
(72) Erfinder: WESSEL, Robert, D-97080 Würzburg (DE)
(86) Internationale Anmeldenummer: PCT/EP2000/003156
(87) Internationale Veröffentlichungsnummer: WO 2000/069711

(56) Entgegenhaltungen:
- EP-A- 0 878 383
- DE-U- 29 804 998
- US-A- 5 134 897
- US-A- 5 437 206
- PATENT ABSTRACTS OF JAPAN vol. 1998, no. 04, 31. März 1998 (1998-03-31) & JP 09 309521 A (FUJI CORN SEISAKUSHO:KK), 2. Dezember 1997 (1997-12-02)

## Beschreibung

Die Erfindung bezieht sich auf ein Verschlußglied für eine Montageöffnung an einem Gehäuse eines Schalters für Fahrräder aus gummielastischem Material, wobei diese Montageöffnung vorzugsweise für die Montage eines Seiles für einen Bowdenzug geeignet ist, welches aus dieser Montageöffnung herausgezogen werden kann für den Fall, daß ein Schaden an der Bowdenzugübertragung aufgetreten ist.

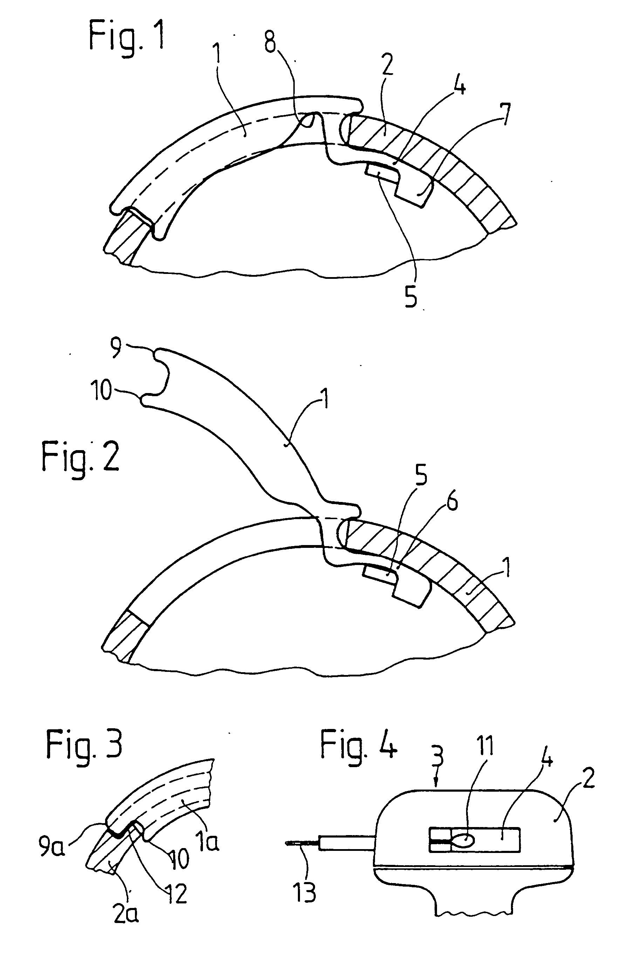

Aus dem US-Patent 5,134,897 ist ein Drehgriffschalter bekannt geworden, der einen Handgriff mit einer Seilspule aufweist, auf welche ein Seil zur Betätigung eines Fahrradgetriebes aufgewickelt werden kann. Das Seil endet in einem Nippel, der in der Seilspule arretierbar ist, wobei sich die Seilspule in einem am Fahrrad montierten Gehäuse bewegt, welches eine Öffnung aufweist, die in einer bestimmten Stellung der Seilspule über dem Nippel zu liegen kommt, wodurch es möglich wird, das Seil mit dem Nippel voraus durch die Öffnung im Gehäuse zu ziehen oder zu schieben. Wie das Seil herausgenommen wird, so kann es auch wieder montiert werden. Die Position des Nippels zur Öffnung im Gehäuse geht insbesondere aus den Fig. 3, 6, 8 und 12 hervor.

Es fehlt jedoch eine Abdeckung der Öffnung im Gehäuse, die verhindern könnte, daß Schmutz in die empfindliche Lagerung der Seilspule eindringen kann. Die Konstruktion ist vielmehr derart ausgelegt, daß eine Abdeckung nicht möglich ist, weil die Öffnung gleichzeitig als Fenster für die auf der Seilspule angeordneten Ziffern einer Ganganzeige sind. Allenfalls eine durchsichtige Scheibe könnte in diesem Fall die Öffnung abdecken.

Abdeckungen von Öffnungen im Gehäuse eines Schalters für die Montage eines Seils mit dessen Nippel sind jedoch bekannt und werden in großer Stückzahl von der Anmelderin vertrieben. Die Abdeckungen sind jedoch im Falle einer Seilreparatur in Folge ihrer geringen Größe schnell verloren gegangen und müssen später ersetzt werden. Der Erfindungsgegenstand dieser Anmeldung beschäftigt sich mit der Unverlierbarkeit eines Verschlußgliedes, welches diese vorgenannte Montageöffnung beliebig oft verschließen kann, ohne verlorenzugehen oder bei der Montage Schaden zu nehmen. Erreicht wird dies durch die Wahl des Materials und die Anordnung des Verschlußgliedes am Gehäuse. Da das Verschlußglied keine nennenswerten Kräfte übertragen oder auf sich wirken lassen muß, kann es aus relativ weichen gummielastischem Material ausgeführt sein und mit einem Fortsatz versehen sein, der sich an dem Gehäuse befestigen läßt, wobei nach Öffnung des Verschlußgliedes dieses mit dem Fortsatz am Gehäuse hängenbleibt und für die spätere Schließung der Montageöffnung zur Verfügung bleibt.

EP-A-0 878 383 zeigt eine Gehäuse anordnung eines Fahrradgangschaltungsmechanismus gemäß dem Oberbegriff von Anspruch 1.

Die Erfindung hat es sich somit zur Aufgabe gemacht, ein Verschlußglied für eine Montageöffnung an einem Gehäuse eines Schalters für Fahrräder aus gummielastischem Material zu schaffen, welches beliebig oft geöffnet und zuverlässig geschlossen werden kann, wobei eine Verliersicherung dafür sorgt, daß das Verschlußglied während der Montage des Seils nicht verloren geht.

Die Lösung ist im kennzeichnenden Teil des Hauptanspruches sowie in den Unteransprüchen enthalten.

Anhand einiger Skizzen wird ein Ausführungsbeispiel eines Verschlußgliedes für ein Gehäuse an einem Schalter erläutert. Es zeigen:
- Fig. 1: ein Verschlußglied mit einem Fortsatz in einem Gehäuse eines Schalters in Teilschnittdarstellung;
- Fig. 2: das geöffnete Verschlußglied mit einer Ober- und einer Unterlippe zur Arretierung des Verschlußgliedes am Rand einer Montageöffnung des Gehäuses;
- Fig. 3: die Ausbildung des Randes der Montageöffnung durch einen Absatz;
- Fig. 4: die Anordnung der Montageöffnung am Schalter.

Wird mit 1 ein Verschlußglied für ein Gehäuse 2 eines Schalters 3 bezeichnet, so ist dieses in einer Montageöffnung 4 über einen Fortsatz 6 verliersicher insofern befestigt, als der Fortsatz 6 hinter einem Halteglied 5 einsteckbar angeordnet ist, wobei das Ende des Fortsatzes 6 aus einer Verdickung 7 besteht, welche sich gegen das Gehäuse 2 und das Halteglied 5 derart abstützt, daß das Verschlußglied 1 nicht mehr aus einer derart gebildeten Verankerung herausgezogen werden kann. Ferner weist das Verschlußglied 1 eine zumindest teilweise an der Oberfläche des Gehäuses 2 des Schalters 3 umlaufende Oberlippe 9 auf, die sich über den Rand der Montageöffnung 4 legt, wenn das Verschlußglied 1 die Montageöffnung 4 verschlossen hat.

Gemäß Fig. 1 wird gezeigt, wie die Oberlippe 9 die Montageöffnung 4 gegen Schmutz oder eindringendes Wasser abdichtet. Eine ebenfalls zumindest teilweise im Inneren des Gehäuses 2 umlaufende Unterlippe 10 verhindert, daß das einmal verschlossene Verschlußglied 1 sich nicht selbständig öffnet.

Gemäß Fig. 2 wird dargestellt, wie das Verschlußglied 1 die Montageöffnung 4 im geöffneten Zustand freigibt. Hierbei kommt eine Ausformung 8, die einer Einschnürung gleichkommt, zum Einsatz und wirkt wie ein Scharnier, wobei der Fortsatz 6 mit der Verdickung 7 hinter dem Halteglied 5 von der Bewegung des Verschlußgliedes unberührt liegenbleibt.

Gemäß Fig. 3 ist der Rand der Montageöffnung derart modifiziert, daß sich eine Oberlippe 9a auf einen Absatz 12 in einem Gehäuse 2a legt, wobei ein modifiziertes Verschlußglied 1a sich im verschlossenen Zustand wenigstens teilweise in die Montageöffnung 4 versenken läßt, so daß die Oberlippe 9a nicht mehr über die Kontur des Gehäuses 2a hinausreicht und eine elegantere Verschlußmöglichkeit bildet.

Gemäß Fig. 4 wird eine Montageöffnung gezeigt, die in einer bestimmten Stellung eines Seiles 13 bei geöffnetem Verschlußglied 1 einen Nippel 11 des Seiles 13 freilegt, welcher durch die Montageöffnung 4 entweder mit einem Werkzeug herausgezogen werden kann, oder der sich durch die Montageöffnung 4 schieben läßt, wenn das Seil 13 von außerhalb des Schalters 3 angeschoben wird.

Das Verschlußglied 1,1 a läßt sich durch das spritzgießtechnisch einfach anbringbare Halteglied 5 leicht im Gehäuse 2 des Schalters 3 verankern, wodurch sich gegenüber der bisherigen Lösung eines einfachen Verschlußdeckels der Vorteil ergibt, ein Verschlußglied 1,1 a mit Verliersicherung zu haben. Als weiterführende Ausgestaltung wäre die versenkbar Dichtlippe 9a zu nennen, die dem Gehäuse 2a im Bereich der Montageöffnung 4 eine optische Aufwertung verleiht.

## Patentansprüche

1. Gehäuseanordnung eines Fahrradgangschaltmechanismus, die folgendes umfasst:
Ein Gehäuse (2), das eine durch ein Verschlußglied (1) abgedeckte Montageöffnung (4) aufweist;
ein Seil (13), das im Innern des Gehäuses verläuft, mit einem Nippel (11), das durch die Montageöffnung zugänglich ist;
wobei das Verschlussglied (1) einen in das Innere des Gehäuses (2) reichenden Fortsatz (6) aufweist, der mit dem Gehäuse (2) über eine Fügebefestigung an einem Halteglied (5) verbunden ist, und das an der am weitesten vom Fortsatz (6) entfernten Stelle derart ausgebildet ist, dass es an den Rand der Montageöffnung (4) zur Anlage kommt;
charakterisiert **dadurch**, dass
das Verschlussglied (1) zur Wiederverschließbarkeit der Montageöffnung aus einem gummielastischen Material besteht und in der Nähe zum Fortsatz (6) eine Ausformung (8) aufweist, die bewirkt, dass das Verschlußglied (1) ähnlich einem Scharnier aufgeklappt werden kann.

2. Verschlußglied nach Anspruch 1,
**dadurch gekennzeichnet,**
**daß** der Fortsatz (6) eine Verdickung (7) aufweist, die den Fortsatz (6) in seiner Position am Halteglied (5), auch unter Zugbelastung ausgehend vom Verschlußglied (1), hält.

3. Verschlußglied nach Anspruch 1 oder 2,
**dadurch gekennzeichnet,**
**daß** das Verschlußglied (1) eine Oberlippe (9) aufweist, die sich über den Rand der Montageöffnung (4) legt.

4. Verschlußglied nach einem der Ansprüche 1 bis 3,
**dadurch gekennzeichnet,**
**daß** das Verschlußglied (1) eine Unterlippe (10) zumindest an der von dem Fortsatz (6) am weitesten entfernten Stelle aufweist, die sich nach dem Schließen der Montageöffnung (4) durch das Verschlußglied (1) unter den Rand der Montageöffnung (4) schiebt.

5. Verschlußglied nach einem der Ansprüche 1 bis 4,
**dadurch gekennzeichnet,**
**daß** der Rand der Montageöffnung (4) in einem Gehäuse (2a) einen Absatz (12) aufweist, auf den sich eine Oberlippe (12a) eines Verschlußgliedes (1a) zu dessen versenkter Anordnung am Schalter (3) anlegen läßt.

## Claims

1. Casing arrangement of a bicycle gear changing mechanism, which includes the following:
a casing (2) which has a mounting opening (4) covered by a closure member (1);
a cable (13) which extends inside the casing and has a bulb (11) which is accessible through the mounting opening,
in which the closure member (1) has an extension piece (6) reaching inside the casing (2) and connected to the casing (2) by way of a join-securing piece on a holding member (5), and this closure member (1) is constructed at the point furthest away from the extension piece (6) such that it comes into abutment against the edge of the mounting opening (4);
**characterized in that**
the closure member (1) is made from a material which is elastic in the manner of rubber, such that it is possible to re-close the mounting opening, and has in the vicinity of the extension piece (6) a shaping (8) which has the effect that the closure member (1) can be flapped open in a manner similar to a hinge.

2. Closure member according to Claim 1,
**characterized in that**
the extension piece (6) has a thickened portion (7) which keeps the extension piece (6) in its position against the holding member (5) even under tensile load from the closure member (1).

3. Closure member according to Claim 1 or 2,
**characterized in that**
the closure member (1) has an upper lip (9) which comes to lie over the edge of the mounting opening (4).

4. Closure member according to one of Claims 1 to 3,
**characterized in that**
the closure member (1) has, at least at the point furthest away from the extension piece (6), a lower lip (10) which once the mounting opening (4) has been closed by the closure member (1) is pushed below the edge of the mounting opening (4).

5. Closure member according to one of Claims 1 to 4,
**characterized in that**
the edge of the mounting opening (4) in a casing (2a) has a shoulder (12) against which an upper lip (12a) of a closure member (1a) can be brought to abut such that the latter is arranged in recessed manner on the switch (3).

## Revendications

1. Agencement de boîtier d'un mécanisme de changement de vitesses de bicyclette, comprenant les éléments suivants : un boîtier (2) qui présente une ouverture de montage (4) recouverte par un organe de fermeture (1) ;
un câble (13) qui s'étend à l'intérieur du boîtier, avec un raccord fileté (11), et qui est accessible à travers l'ouverture de montage ;
l'organe de fermeture (1) présentant une saillie (6) s'étendant à l'intérieur du boîtier (2), qui est connectée au boîtier (2) par le biais d'une fixation à joint sur un organe de retenue (5), et étant réalisé à l'emplacement le plus éloigné de la saillie (6) de telle sorte qu'il vienne en appui contre le bord de l'ouverture de montage (4) ;
**caractérisé en ce que**
l'organe de fermeture (1) se compose d'un matériau en plastique élastomère pour permettre de refermer l'ouverture de montage, et présente, à proximité de la saillie (6), une formation (8) qui fait en sorte que l'organe de fermeture (1) puisse être ouvert comme une charnière.

2. Organe de fermeture selon la revendication 1,
**caractérisé en ce que**
la saillie (6) présente un épaississement (7) qui retient la saillie (6) dans sa position sur l'organe de retenue (5), même en cas de contrainte de traction provenant de l'organe de fermeture (1).

3. Organe de fermeture selon la revendication 1 ou 2,
**caractérisé en ce que**
l'organe de fermeture (1) présente une lèvre supérieure (9) qui se place par-dessus le bord de l'ouverture de montage (4).

4. Organe de fermeture selon l'une quelconque des revendications 1 à 3,
**caractérisé en ce que**
l'organe de fermeture (1) présente une lèvre inférieure (10) au moins à l'emplacement le plus éloigné de la saillie (6), laquelle se déplace sous le bord de l'ouverture de montage (4) après la fermeture de l'ouverture de montage (4) par l'organe de fermeture (1).

5. Organe de fermeture selon l'une quelconque des revendications 1 à 4,
**caractérisé en ce que**
le bord de l'ouverture de montage (4) présente dans un boîtier (2a) un retrait (12) sur lequel peut s'appliquer une lèvre supérieure (12a) d'un organe de fermeture (1a) en vue de son agencement renfoncé sur le commutateur (3).
